# EUROPEAN PATENT APPLICATION

(11) **EP 4 443 916 A1**
(43) Date of publication of application: **09.10.2024**
(21) Application number: 23777596.0
(22) Date of filing: 13.01.2023
(51) Int. Cl.: H04W 4/029

(54) **TRACKING AND POSITIONING METHOD AND APPARATUS, ELECTRONIC DEVICE, AND STORAGE MEDIUM**

(30) Priority: 31.03.2022 CN 202210345811
(71) Applicant: ZTE Corporation, Shenzhen, Guangdong 518057 (CN)
(72) Inventor: CHANG, Zhe, Shenzhen, Guangdong 518057 (CN); LIAO, Liang, Shenzhen, Guangdong 518057 (CN); YU, Hongquan, Shenzhen, Guangdong 518057 (CN)
(74) Representative: Osterhoff, Utz
(86) International application number: PCT/CN2023/072166
(87) International publication number: WO 2023/185217

(57) **Abstract**

Disclosed is a method for tracking and positioning, including: positioning a tracking target, and obtaining an initial position of the tracking target (S101); collecting and obtaining movement data of the tracking target (S102); determining a movement mode of the tracking target based on the movement data (S103); and determining an actual position of the tracking target based on the initial position and the movement mode (S104). Also disclosed are an apparatus for tracking and positioning, an electronic device, and a computer-readable storage medium.

## Description

### CROSS-REFERENCE TO RELATED APPLICATIONS

The present application claims priority to Chinese patent application No. 202210345811.X, entitled in "METHOD FOR TRACKING AND POSITIONING, APPARATUS, ELECTRONIC DEVICE, AND STORAGE MEDIUM", and filed on March 31, 2022, the entire contents of which are incorporated herein by reference.

### TECHNICAL FIELD

The present application relate to the technical field of intelligent device, and in particular to a method for tracking and positioning, an apparatus, an electronic device and a storage medium.

### BACKGROUND

At present, there are many types of internet of things (IoT) terminal products, and customers have increasingly higher requirements for product functions and performance. For tracker products, traditional positioning technologies such as global positioning system (GPS) /wireless fidelity (WIFI) /base stations are generally used for tracking and positioning.

### SUMMARY

The present application provides a method for tracking and positioning, an apparatus for tracking and positioning, an electronic device and a computer-readable storage medium.

In a first aspect, the present application provides a method for tracking and positioning, including: positioning a tracking target, and obtaining an initial position of the tracking target; collecting and obtaining movement data of the tracking target; determining a movement mode of the tracking target based on the movement data; and determining an actual position of the tracking target based on the initial position and the movement mode.

In a second aspect, the present application provides an apparatus for tracking and positioning, including: an initial positioning module, configured to locate the tracking target and obtain an initial position of the tracking target; a movement data acquisition module, configured to collect and obtain movement data of the tracking target; a movement mode recognition module, configured to determine a movement mode of the tracking target based on the movement data; and a precise positioning module, configured to determine an actual position of the tracking target based on the initial position and the movement mode.

In a third aspect, the present application provides an electronic device, including: a memory, configured to store a computer program; and a processor, configured to implement the steps of the method for tracking and positioning when executing the computer program.

In a fourth aspect, the present application provides a computer-readable storage medium, storing a computer program; when the computer program is executed by a processor, the steps of the method for tracking and positioning are implemented.

### BRIEF DESCRIPTION OF THE DRAWINGS

The accompanying drawings, which are incorporated in and constitute a part of this specification, illustrate embodiments consistent with the present application and together with the description, serve to explain the principles of the present application.

In order to more clearly explain the related technology and the technical solutions in the embodiments of the present application, the following will briefly introduce the related technology and the drawings that need to be used in describing the embodiments of the present application. Of course, the following drawings related to the embodiments of the present application describe only some of the embodiments of the present application. For those skilled in the art, without exerting creative efforts, other drawings can also be obtained based on the provided drawings. The other drawings obtained also belong to the protection scope of the present application.
FIG. 1 is a schematic flowchart of a method for tracking and positioning according to an embodiment of the present application.
FIG. 2 is a schematic diagram of street distribution according to an embodiment of the present application.
FIG. 3 is a schematic flowchart of another method for tracking and positioning according to an embodiment of the present application.
FIG. 4 is a schematic flowchart of a method for constructing a movement mode library according to an embodiment of the present application.
FIG. 5 is a schematic flowchart of another method for tracking and positioning according to an embodiment of the present application.
FIG. 6 is a machine learning flowchart according to an embodiment of the present application.
FIG. 7 is a tracking and positioning flowchart according to an embodiment of the present application.
FIG. 8 is a schematic structural diagram of an apparatus for tracking and positioning according to an embodiment of the present application.
FIG. 9 is a schematic structural diagram of an electronic device according to an embodiment of the present application.

### DETAILED DESCRIPTION OF THE EMBODIMENTS

In order to make the purpose, technical solutions and advantages of the embodiments of the present application clearer, the technical solutions in the embodiments of the present application will be clearly and completely described below in conjunction with the drawings in the embodiments of the present application. Obviously, the described embodiments are some embodiments of the present application, but not all embodiments. Based on the embodiments in the present application, all other embodiments obtained by those skilled in the art without any creative efforts fall within the scope of protection of the present application.

When using traditional positioning technologies such as GPS /WIFI /base stations for tracking and positioning, they are limited by factors such as GPS signal obstruction, blank WIFI hotspots, and uneven distribution of base stations. Problems with inaccurate positioning often occur. For example, traditional GPS positioning technology can locate the tracker on a certain road. However, due to unfavorable factors such as blocked signals and weak signals, it is impossible to determine where on the road it is and whether it is in vehicles on the road or on the sidewalk. It can be seen that traditional tracking and positioning technology has the problem of inaccurate positioning.

Therefore, how to effectively improve the accuracy of tracking and positioning is an urgent problem that needs to be solved by those skilled in the art.

It should be noted that the method for tracking and positioning provided by the present application can be implemented by an apparatus for tracking and positioning. The apparatus for tracking and positioning can be a portable device or a portable wearable device, such as a mobile phone, a smart bracelet, etc. that the user can carry with him or her. It can be a micro tracker, for example, it can be worn in the form of an accessory to track the target. For example, when the tracking target is children or the elderly, the tracking and positioning function can be integrated into the smart bracelet; when the tracking target is an animal, a micro tracker can be installed on the traction collar of the animal; when the tracking target is express delivery, the micro tracker can be placed in the express box containing the express delivery.

It should also be noted that the method for tracking and positioning provided by the embodiments of the present application can be executed in real time or regularly/unscheduledly. The execution mode can be customized by the user according to actual needs, and the present application does not limit this. For example, a switch button can be set on the apparatus for tracking and positioning to control the opening and closing of the tracking and positioning function (such as directly selecting the switch in a smart bracelet); a switch button can also be set on the remote control device of the apparatus for tracking and positioning so as to remotely control the opening and closing of the tracking and positioning function (such as using a mobile phone to control the opening and closing of a micro tracker); of course, the above two control methods can also exist at the same time for users to choose freely. In addition, during the implementation of the scheduled method for tracking and positioning, the user can set a timing time in the apparatus for tracking and positioning or its remote control device according to actual needs, such as performing a tracking and positioning operation every 24 hours.

On this basis, embodiments of the present application provide a method for tracking and positioning.

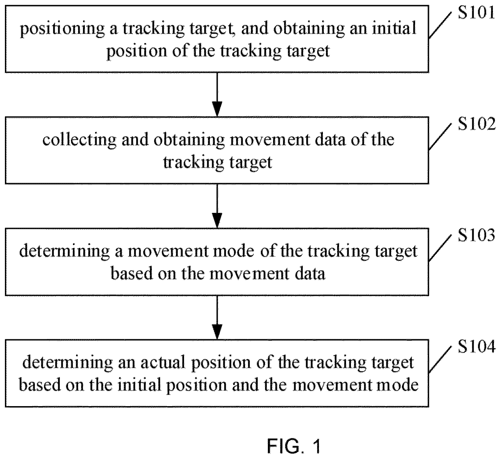

Please referring to FIG. 1, FIG. 1 is a schematic flowchart of a method for tracking and positioning according to an embodiment of the present application. The method for tracking and positioning may include steps S101 to S104.

S101: positioning a tracking target, and obtaining an initial position of the tracking target.

This step aims to achieve the initial positioning of the tracking target to obtain its initial position. Among them, the tracking target is the target object that needs to be tracked and positioned, which can be a person or an object. For example, when the tracking target is a person, the function of locating children or the elderly can be realized; when the tracking target is an object, the logistics tracking, animal monitoring and other functions can be realized.

During the implementation process, the initial positioning process can be implemented using any traditional positioning technology. Since traditional positioning technology has the defect of inaccurate positioning, the initial position obtained in this step is an approximate position that is not accurate enough. For example, by initially positioning the tracking target, it can be determined that the tracking target is located on a certain street, but the position of the tracking target on the street is not determined. On this basis, combined with the various steps described below, the precise positioning of the tracking target can be achieved, that is, the position of the tracking target on the above-mentioned street can be determined, such as on the sidewalk of the street, on the carriageway, in the street building, etc.

S102: collecting and obtaining movement data of the tracking target.

This step aims to collect the movement data of the tracking target. This movement data is the data information used to characterize the current movement form of the tracking target. Its content does not affect the implementation of this technical solution and can be set by the user according to actual needs. For example, it may include speed, acceleration, gravity acceleration, etc., which is not limited in the present application.

Among them, the collection of movement data can be realized based on corresponding data collection device, such as sensor device. For different types of movement data, corresponding types of sensors can be set in the tracking and positioning device. Of course, the type and number of sensors are determined by the the type and amount of movement data needs to be obtained.

S103: determining a movement mode of the tracking target based on the movement data.

This step aims to realize the movement mode, that is, to determine the movement mode of the tracking target based on the movement data recognition of the tracking target. Among them, the movement mode is used to achieve more accurate positioning of the tracking target in combination with the initial position. Its modes can include but are not limited to walking, operating, going up/down stairs, going up/down elevators, and taking various means of transportation (such as subway, and buses), etc.

As mentioned above, movement data may include speed, acceleration, gravitational acceleration, etc. Therefore, these movement data can be analyzed and processed to identify and determine the current movement mode of the tracking target. For example, it can be determined based on the speed of the tracking target whether it is in walking mode (corresponding to low speed) or ride mode (corresponding to high speed);it is determined whether it is in elevator mode based on the gravity acceleration (overweight or weightlessness) of the tracking target.

S104: determining an actual position of the tracking target based on the initial position and the movement mode.

This step aims to achieve precise positioning of the tracking target to obtain its actual position. On the basis of obtaining the initial position of the tracking target based on S101 and obtaining the movement mode of the tracking target based on S102 and S103, the actual position of the tracking target can be determined based on the initial position and the movement mode. The actual position is the more accurate position information compared with the above initial position.

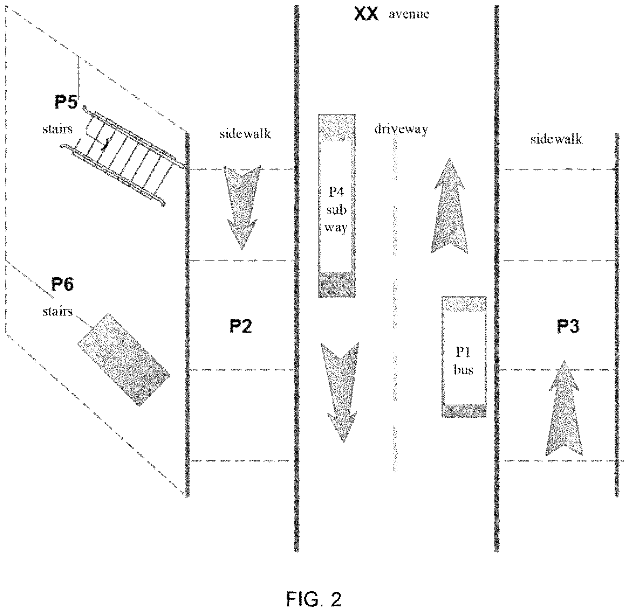

For example, taking a certain street positioning as an example, please referring to FIG. 2, FIG. 2 is a schematic diagram of street distribution according to an embodiment of the present application. In the initial positioning process based on S101, it is determined that the tracking target is located on a certain street (XX street shown in FIG. 2); if it is recognized that the operating mode of the tracking target is the bus riding mode in a certain moving direction, the position P1 of the tracking target (on the bus in the lane) can be determined; if it is recognized that the movement mode of the tracking target is the walking mode in a certain moving direction, you can determine the position P2 of the tracking target (on the left sidewalk) or P3 (on the right sidewalk); similarly, you can locate other positions: P4 (on the subway in the lane), P5 (on the stairs in the street building), P6 (on the elevator in the street building), etc., thus achieving precise positioning of the tracking target.

It can be seen that the method for tracking and positioning provided by the embodiment of the present application, on the basis of preliminary positioning of the tracking target to obtain the initial position, the movement data of the tracking target is collected and the movement mode recognition is performed on it, thereby combining the movement mode and the initial position to determine the precise position of the tracking target, and integrate the movement mode of the tracking target into the tracking and positioning technology. Compared with the traditional tracking and positioning technology, it not only effectively improves the positioning accuracy, but also obtains the movement status of the tracking target, which enriches the function of the tracker produce and improves the positioning performance of the product.

Based on the above embodiments, in one embodiment of the present application, the above-mentioned positioning the tracking target and obtaining the initial position of the tracking target may include: using GPS positioning technology or WIFI positioning technology or base station positioning technology to locate the tracking target so as to obtain the initial position.

The embodiments of the present application provide three different types of positioning technologies, namely GPS positioning technology, WIFI positioning technology and base station positioning technology. Among them, GPS positioning technology is a technology that obtains position information by performing error processing and then calculating on the signals received by the GPS receiver; WIFI positioning technology, or WIFI real-time positioning, uses relevant wireless networks and cooperates with WIFI tags and related mobile terminal devices (such as WIFI mobile phones, PDAs, laptops, etc.), combined with corresponding positioning algorithms, and is a technology to determine position information; base station positioning technology is mobile position service, which is a communications service that calculates approximate position based on the communication time difference between the base station and the mobile terminal device. It should be noted that the above three positioning technologies are only the three implementation methods provided in the embodiment of the present application. Of course, it can also be implemented using other positioning technologies, and the present application does not limit this.

In one embodiment of the present application, the above-mentioned collecting and obtaining the movement data of the tracking target may include: using a movement sensor to collect and obtain the movement data of the tracking target; the movement sensor includes one or more of a gravity sensor, an acceleration sensor, and a speed sensor.

The embodiment of the present application provides a method for obtaining movement data, which is implemented based on a movement sensor. During the implementation process, the movement sensor can be installed inside the apparatus for tracking and positioning, and the apparatus for tracking and positioning can be carried on the tracking target to collect various movement data of the tracking target.

At the same time, embodiments of the present application provide three different types of movement sensors, namely gravity sensors, acceleration sensors and speed sensors. The gravity sensor is used to collect the gravity acceleration of the tracking target, the acceleration sensor is used to collect the horizontal acceleration of the tracking target, and the speed sensor is used to collect the speed of the tracking target.

Similarly, the above three types of movement sensors are only three implementation methods provided by the embodiments of the present application. Of course, other types of operating sensors can also be set according to actual needs, such as multi-axis sensors, in order to achieve the collection of diversified movement data. The present application also does not limit this. It is conceivable that the more types and quantities of movement sensors, the greater the types and quantities of movement data collected, which will help achieve more accurate and diverse movement mode recognition.

The embodiment of the present application provides another method for tracking and positioning.

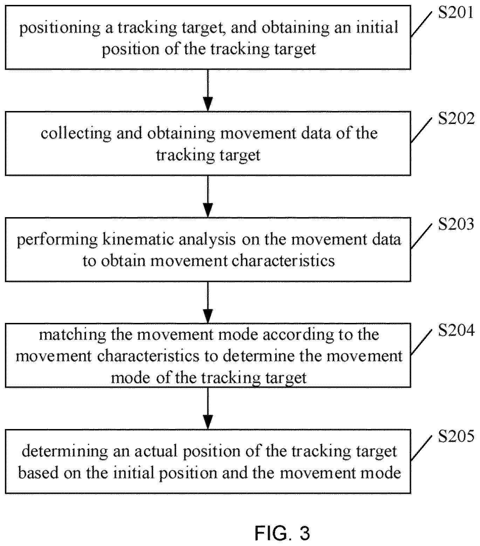

Please referring to FIG. 3, which is a schematic flowchart of another method for tracking and positioning according to an embodiment of the present application. The method for tracking and positioning may include steps S201 to S205.

S201: positioning the tracking target and obtaining the initial position of the tracking target.

S202: collecting and obtaining the movement data of the tracking target.

S203: performing kinematic analysis on the movement data to obtain movement characteristics.

S204: performing movement mode matching based on movement characteristics to determine the movement mode of the tracking target.

S205: determining the actual position of the tracking target based on the initial position and movement mode.

In an embodiment of the present application, an implementation method for realizing movement mode recognition based on movement data is provided.

On the basis of collecting the movement data of the tracking target, kinematic analysis can be performed on each movement data to obtain the corresponding movement characteristics. Among them, the kinematic analysis can be realized through kinematic formula calculation, and the movement characteristics are used to realize the identification of the movement mode. Its content can be preset by technicians based on actual conditions. For example, the movement distance and direction of the tracking target can be calculated based on movement data such as speed and acceleration; the overweight or weight loss state of the tracking target can be calculated based on movement data such as speed and gravity acceleration.

Furthermore, by performing movement mode matching based on each movement characteristic, the movement mode of the tracking target can be determined, where the movement mode matching can be threshold matching (the movement characteristics of different movement modes correspond to different standard thresholds). For example, based on the selection of speed value, it can be determined whether the tracking target is in walking mode or riding mode. Combined with the movement direction, the tracking target can be further determined which lane (ordinary vehicle or rail vehicle) or sidewalk (left sidewalk or right sidewalk) the target is on. According to the acceleration of gravity, it can be determined whether the tracking target is in the elevator mode. Combined with the overweight and weightlessness conditions, it can be further determined whether the tracking target is in the elevator up mode or elevator down mode.

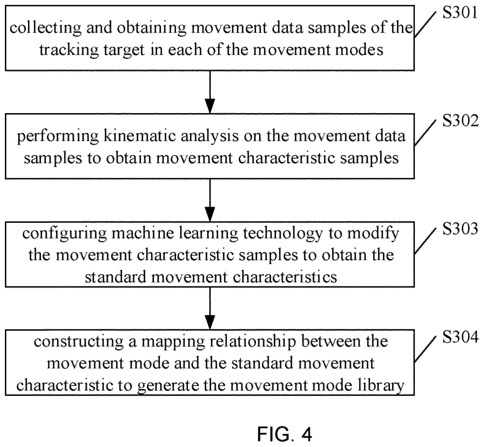

In one embodiment of the present application, each movement mode and standard movement characteristics are correspondingly stored in the movement mode library. On this basis, please referring to FIG. 4. FIG. 4 is a schematic flowchart of a movement mode library construction method according to an embodiment of the present application. The movement mode library construction method may include steps S301 and S304.

S301: collecting and obtaining movement data samples of the tracking target in each movement mode.

S302: performing kinematic analysis on the movement data samples to obtain movement characteristic samples.

S303: using machine learning technology to correct the movement characteristic samples to obtain standard movement characteristics.

S304: constructing a mapping relationship between movement modes and standard movement characteristics, and generating a movement mode library.

For ease of understanding, the above steps are combined for description below.

Each movement mode and standard movement characteristics can be correspondingly stored in the movement mode library. That is to say, in the movement mode library, the mapping relationship between movement modes and standard movement characteristics is stored, that is, different movement modes correspond to different standards. Therefore, after obtaining the movement data of the tracking target and analyzing and determining its movement characteristics, the movement mode can be recognized by matching the movement characteristics with standard movement characteristics in the movement mode library.

The generation process of the movement mode library can be implemented based on machine learning technology. First, the sample data of the tracking target is collected to obtain its movement data samples in various movement modes. It can be understood that in order to ensure the accuracy of the mapping relationship, a large number of movement data samples can be collected for each movement mode; then, kinematic analysis is performed on each movement data sample to obtain corresponding movement characteristic samples, and the implementation process can refer to the above S203; further, machine learning technology is used to correct the movement characteristic samples to obtain the standard movement characteristics corresponding to the movement mode; for example, the standard movement characteristics corresponding to the walking mode are: the speed is within a certain standard speed value; the standard movement characteristics corresponding to the rail vehicle mode are: the speed exceeds a certain standard speed value; finally, after obtaining the standard movement characteristics corresponding to each movement mode, the mapping relationship between each movement mode and the standard movement characteristics can be constructed and stored in a preset storage space to generate a movement mode library.

In one embodiment of the present application, after the above-mentioned constructing the mapping relationship between movement modes and standard movement characteristics and generating the movement mode library, it may also include: performing an update operation on the movement mode library when an update instruction is received; The update operation includes adding or deleting movement modes in the movement mode library and/or modifying each standard movement characteristic.

In order to effectively ensure the accuracy of movement mode recognition results and further ensure the accuracy of tracking and positioning results, scheduled/unscheduled update operations can be performed on the movement mode library. For example, when the tracking target is a child, as the child grows, the corresponding movement characteristics of the same movement mode will inevitably change significantly, and the movement modes will be more diverse. Therefore, the corresponding movement mode library can be updated regularly, such as once every one year.

There are two main types of update operations for the movement mode library. One is to add or delete movement modes in the movement mode library, such as adding a mapping relationship between a new movement mode and standard movement characteristics; the other is to modify each standard movement characteristic in the movement mode library to obtain standard movement characteristics corresponding to each movement mode that are more suitable for the current tracking target.

The update operation of the movement mode library can be implemented based on the received update instruction. In the scheduled update mode, the update instruction can be automatically responded to according to the preset time interval; in the irregular update mode, the update instruction can be initiated by the remote control device of the device for tracking and positioning; for example, a human-computer interaction interface can be set in the remote control device, and the user initiates an update instruction on the human-computer interaction interface.

Therefore, by updating the movement mode library, it can effectively ensure that the mapping relationship between movement modes and standard movement characteristics in the movement mode library is more suitable for the current tracking target, ensuring the accuracy of the mapping relationship, and helping to achieve accurate movement mode recognition, and also effectively ensuring the accuracy of tracking and positioning results.

The embodiment of the present application provides yet another method for tracking and positioning.

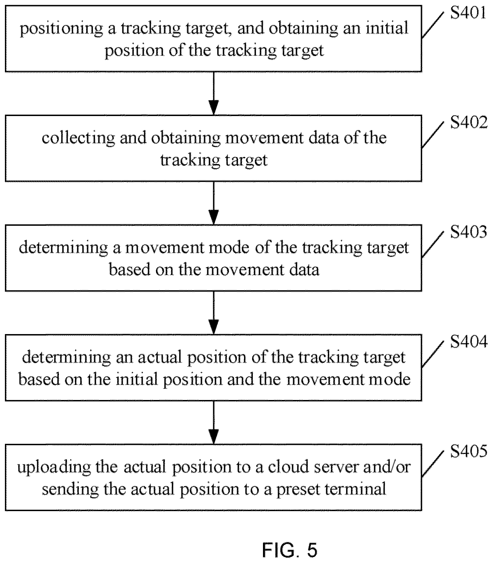

Please referring to FIG. 5, which is a schematic flowchart of another method for tracking and positioning according to an embodiment of the present application. The method for tracking and positioning may include steps S401 to S405.

S401: positioning the tracking target and obtaining the initial position of the tracking target.

S402: collecting and obtaining movement data of the tracking target.

S403: determining the movement mode of the tracking target based on the movement data.

S404: determining the actual position of the tracking target based on the initial position and movement mode.

S405: uploading the actual position to the cloud server and/or sending the actual position to the preset terminal.

The method for tracking and positioning provided by the embodiment of the present application can further realize the position information upload function, that is, the finally obtained actual position is updated to the cloud server, and/or directly sent to the preset terminal. During the implementation process, after obtaining the actual position, the actual position can be uploaded to the cloud server through the mobile network, etc., and the preset monitoring terminal or remote control device (such as mobile phone, PC, etc.) can log in to the cloud server to query the position information; the actual position information can also be sent directly to the preset terminal, which can be a monitoring terminal or a remote control device.

For example, when the tracking target is a child or the elderly, the preset terminal can be the mobile phone of the parent or child. After tracking the actual position of the child or the elderly, it can be directly sent to the preset terminal to effectively ensure the safety of the child or the elderly. When the tracking target is express delivery, after tracking the actual position of the express delivery, it can be directly uploaded to the cloud server, so that the sending and receiving managers can log in to the cloud server to query the current position of the express delivery when needed. Of course, the two functions of uploading the actual position to the cloud server and sending it to the preset terminal can exist at the same time, which can facilitate position information query according to actual needs.

In addition, the position information uploading function can be real-time or scheduled, and can be customized according to actual needs. The present application does not limit this.

It can be seen that the method for tracking and positioning provided by the embodiment of the present application realizes the upload function of position information and can effectively ensure that the manager will know the exact position of the tracking target in a timely manner.

Based on the above embodiments, embodiments of the present application provide a method for tracking and positioning. The method for tracking and positioning mainly includes a machine learning process and a tracking and positioning process.

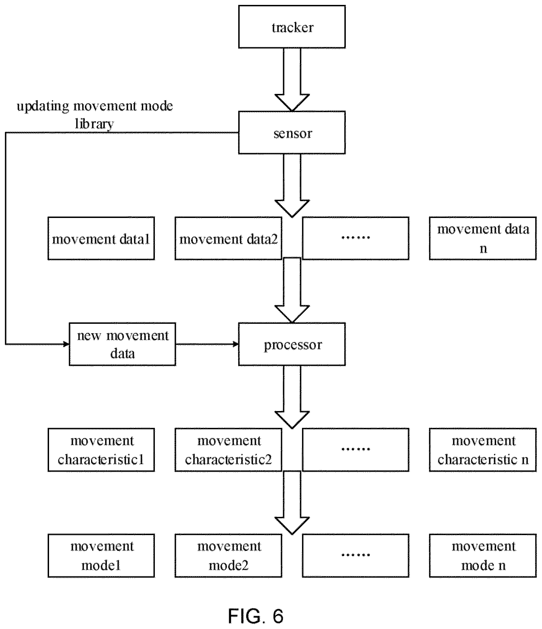

First, please referring to FIG. 6, which is a machine learning flowchart according to an embodiment of the present application. The implementation process may include the following steps (1) to (5).
(1) Using the movement sensor in Tracker to collect movement data (i.e. movement data samples) in various movement modes.
(2) Transmitting the movement data obtained in (1) to a processor such as a CPU or a microcontroller, and extracting movement characteristics (i.e., movement characteristic samples) from each movement data.
(3) Correcting the movement characteristics in (3) through machine learning to obtain standard movement characteristics corresponding to the movement mode.
(4) Constructing a mapping relationship between movement modes and standard movement characteristics, and saving them to the memory to generate a movement mode library.
(5) Updating the movement mode library through machine learning, including but not limited to adding mapping relationships between new movement modes and standard movement characteristics, modifying the standard movement characteristics in each mapping relationship, etc.

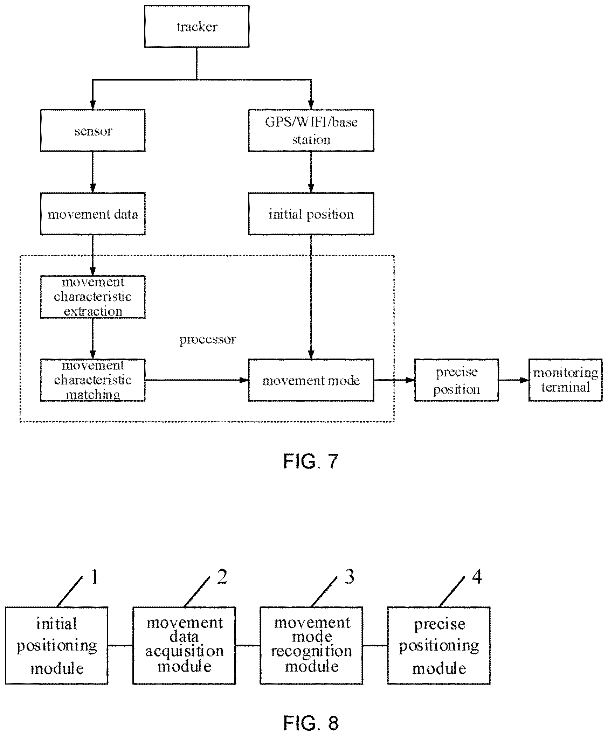

Further, please referring to FIG. 7, which is a tracking and positioning flowchart according to an embodiment of the present application. The implementation process may include the following steps (1) to (6).
(1) Tracker obtains the initial position of the tracked person (tracking target) through positioning technology such as GPS/WIFI/base station.
(2) Tracker obtains the movement data of the tracked person through movement sensors.
(3) Tracker's processor analyzes movement data and extracts movement characteristics.
(4) Tracker's processor compares the movement characteristics in (3) with the movement mode library to confirm the movement mode of the tracked person.
(5) Tracker's processor fuses the initial position in (1) with the movement mode in (4) to obtain more accurate position information.
(6) Tracker's processor sends the position information in (5) to the cloud server or monitoring terminal.

It can be seen that the method for tracking and positioning provided by the embodiment of the present application, on the basis of preliminary positioning of the tracking target to obtain the initial position, the movement data of the tracking target is collected and movement mode recognition is performed on it, thereby combining the movement mode and the initial position to determine the precise position of the tracking target, and integrate the movement mode of the tracking target into the tracking and positioning technology. Compared with the traditional tracking and positioning technology, it not only effectively improves the positioning accuracy, but also obtains the movement status of the tracking target, thereby enriching the function of the tracker product and improving the positioning performance of the product.

An embodiment of the present application provides an apparatus for tracking and positioning.

Please referring to FIG. 8, which is a schematic structural diagram of an apparatus for tracking and positioning according to an embodiment of the present application. The apparatus for tracking and positioning may include: an initial positioning module 1, configured to locate the tracking target and obtain an initial position of the tracking target; a movement data acquisition module 2, configured to collect and obtain movement data of the tracking target; a movement mode recognition module 3, configured to determine a movement mode of the tracking target based on the movement data; and a precise positioning module 4, configured to determine an actual position of the tracking target based on the initial position and the movement mode.

It can be seen that the apparatus for tracking and positioning provided by the embodiment of the present application, on the basis of preliminary positioning of the tracking target to obtain the initial position, the movement data of the tracking target is collected and movement mode recognition is performed on it, thereby combining the movement mode and the initial position to determine the precise position of the tracking target, and integrate the movement mode of the tracking target into the tracking and positioning technology. Compared with the traditional tracking and positioning technology, it not only effectively improves the positioning accuracy, but also obtains the movement status of the tracking target, thereby enriching the function of the tracker product and improving the positioning performance of the product.

In one embodiment of the present application, the above-mentioned movement mode recognition module 3 may include: a kinematics analysis unit configured to perform kinematics analysis on movement data to obtain movement characteristics; and a matching recognition unit configured to perform movement mode matching based on the movement characteristics and determine the movement mode of the tracking target.

In one embodiment of the present application, each movement mode and standard movement characteristics are correspondingly stored in a movement mode library. The apparatus for tracking and positioning may also include a movement mode library construction module. The movement mode library construction module may include: a sample data acquisition unit, configured to collect and obtain movement data samples of the tracking target in various movement modes; a sample data analysis unit, configured to perform kinematic analysis on the movement data samples and obtain movement characteristic samples; a machine learning unit, configured to utilize machine learning technology to modify the movement characteristic samples and obtain standard movement characteristics; and a movement mode library construction unit, configured to construct a mapping relationship between movement modes and standard movement characteristics to generate a movement mode library.

In one embodiment of the present application, the apparatus for tracking and positioning may further include: a movement mode library update module configured to, after the constructing the mapping relationship between movement modes and standard movement characteristics, and generating the movement mode library, in response to that an update instruction is received, perform an update operation on the movement mode library; where the update operation includes adding or deleting movement modes in the movement mode library and/or modifying each standard movement characteristic.

In one embodiment of the present application, the above-mentioned initial positioning module 1 can be configured to use GPS positioning technology or WIFI positioning technology or base station positioning technology to locate the tracking target and obtain the initial position.

In one embodiment of the present application, the above-mentioned movement data acquisition module 2 can be configured to use a movement sensor to collect movement data of a tracking target; the movement sensor includes one or more of a gravity sensor, an acceleration sensor, and a speed sensor.

In one embodiment of the present application, the apparatus for tracking and positioning may further include: an actual position upload module configured to upload the actual position to the cloud server and/or send the actual position to a preset terminal after determining the actual position of the tracking target based on the initial position and movement mode.

An embodiment of the present application provides an electronic device.

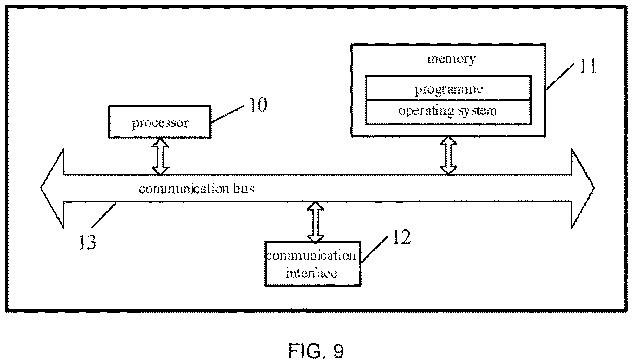

Please referring to FIG. 9, which is a schematic structural diagram of an electronic device provided by the present application. The electronic device may include: a memory configured to store a computer program; and a processor configured to implement the steps of the method for tracking and positioning when executing the computer program.

As shown in FIG. 9, FIG. 9 is a schematic structural diagram of an electronic device. The electronic device may include: a processor 10, a memory 11, a communication interface 12 and a communication bus 13. The processor 10, the memory 11, and the communication interface 12 are all communicated with each other through the communication bus 13.

In the embodiment of the present application, the processor 10 may be a central processing unit (CPU), an application-specific integrated circuit, a digital signal processor, a field programmable gate array, or other programmable logic devices. The processor 10 can call the program stored in the memory 11, and the processor 10 can perform the operations in the embodiment of the method for tracking and positioning.

The memory 11 is used to store one or more programs. The program may include program codes, and the program codes include computer operation instructions. In the embodiment of the present application, the memory 11 at least stores programs for implementing the following functions: positioning the tracking target, and obtaining the initial position of the tracking target; collecting and obtaining the movement data of the tracking target; determining the movement mode of the tracking target based on the movement data; and determining the actual position of the tracking target based on the initial position and movement mode.

In a possible implementation, the memory 11 may include a program storage area and a data storage area, where the program storage area may store an operating system and at least one application program required for a function, etc.; the data storage area may store the data created during use.

In addition, the memory 11 may include high-speed random access memory, and may also include non-volatile memory, such as at least one magnetic disk storage device or other volatile solid-state storage device.

The communication interface 12 may be an interface of a communication module, which is used to connect with other devices or systems.

Of course, it should be noted that the structure shown in FIG. 9 does not constitute a limitation on the electronic device in the embodiment of the present application. In actual applications, the electronic device may include more or fewer components than those shown in FIG. 9, or a combination of certain parts thereof.

Embodiments of the present application provide a computer-readable storage medium. A computer program is stored on the computer-readable storage medium. When the computer program is executed by a processor, the steps of any of the above method for tracking and positioning can be implemented.

The computer-readable storage medium can include: U disk, mobile hard disk, read-only memory (ROM), random access memory (RAM), magnetic disk or optical disk, etc., which can store program code.

For an introduction to the computer-readable storage medium provided by the embodiments of the present application, please referring to the above method embodiments, and the embodiments of the present application will not be described in detail here.

A method for tracking and positioning provided by the present application includes: positioning the tracking target and obtaining the initial position of the tracking target; collecting and obtaining the movement data of the tracking target; determining the movement mode of the tracking target based on the movement data; and determining the actual position of the tracking target based on the initial position and movement mode. By applying the technical solution provided by the present application, on the basis of preliminary positioning of the tracking target to obtain the initial position, the movement data of the tracking target is collected and movement mode recognition is performed on it. Thus, the precise position of the tracking target can be determined by combining the movement mode and the initial position, which realizes the integration of the movement mode of the tracking target into the tracking and positioning technology. Compared with traditional tracking and positioning technology, it not only effectively improves positioning accuracy, but also obtains the movement status of the tracking target, thereby enriching the functions of the tracker product, and improving the positioning performance of the product.

The apparatus for tracking and positioning, electronic device and computer-readable storage medium provided by the present application all have the above beneficial effects, which will not be described again here.

Each embodiment in the specification is described in a progressive manner. Each embodiment focuses on its differences from other embodiments. The same and similar parts between the various embodiments can be referred to each other. As for the device disclosed in the embodiment, since it corresponds to the method disclosed in the embodiment, the description is relatively simple. For relevant details, please referring to the description in the method section.

Those skilled in the art may further realize that the units and algorithm steps of each example described in connection with the embodiments disclosed herein can be implemented by electronic hardware, computer software, or a combination of both. In order to clearly illustrate the possible interchangeability of hardware and software, in the above description, the composition and steps of each example have been generally described according to functions. Whether these functions are performed in hardware or software depends on the specific application and design constraints of the technical solution. Those skilled in the art may implement the described functionality using different methods for each specific application, but such implementations should not be considered to be beyond the scope of the present application.

The technical solution provided by the present application has been introduced in detail above. The present application uses individual examples to illustrate the principles and implementation methods of the present application. The description of the above embodiments is only used to help understand the methods and core ideas of the present application. It should be noted that for those skilled in the art, several improvements and modifications can be made to the present application without departing from the principles of the present application, and these improvements and modifications also fall within the protection scope of the present application.

## Claims

1. A method for tracking and positioning, **characterized by** comprising:
positioning a tracking target, and obtaining an initial position of the tracking target;
collecting and obtaining movement data of the tracking target;
determining a movement mode of the tracking target based on the movement data; and
determining an actual position of the tracking target based on the initial position and the movement mode.

2. The method for tracking and positioning according to claim 1, wherein the determining the movement mode of the tracking target based on the movement data comprises:
performing kinematic analysis on the movement data to obtain movement characteristics; and
matching the movement mode according to the movement characteristics to determine the movement mode of the tracking target.

3. The method for tracking and positioning according to claim 2, wherein each movement mode and standard movement characteristics are correspondingly stored in a movement mode library;
a construction process of the movement mode library comprises:
collecting and obtaining movement data samples of the tracking target in each of the movement modes;
performing kinematic analysis on the movement data samples to obtain movement characteristic samples;
configuring machine learning technology to modify the movement characteristic samples to obtain the standard movement characteristics; and
constructing a mapping relationship between the movement mode and the standard movement characteristic to generate the movement mode library.

4. The method for tracking and positioning according to claim 3, wherein after the constructing the mapping relationship between the movement mode and the standard movement characteristic to generate the movement mode library, the method further comprises:
in response to that an update instruction is received, an update operation is performed on the movement mode library; wherein the update operation comprises adding or deleting movement modes in the movement mode library and/or modifying each of the standard movement characteristics.

5. The method for tracking and positioning according to claim 1, wherein the positioning the tracking target and obtaining the initial position of the tracking target comprises: configuring global positioning system (GPS) positioning technology or
wireless fidelity (WIFI) positioning technology or base station positioning technology to locate the tracking target and obtain the initial position.

6. The method for tracking and positioning according to claim 1, wherein the collecting and obtaining the movement data of the tracking target comprises:
configuring a movement sensor to collect and obtain the movement data of the tracking target; wherein the movement sensor comprises one or more of a gravity sensor, an acceleration sensor, and a speed sensor.

7. The method for tracking and positioning according to claim 1, wherein after the determining the actual position of the tracking target based on the initial position and the movement mode, the method further comprises:
uploading the actual position to a cloud server and/or sending the actual position to a preset terminal.

8. An apparatus for tracking and positioning, **characterized by** comprising:
an initial positioning module, configured to locate the tracking target and obtain an initial position of the tracking target;
a movement data acquisition module, configured to collect and obtain movement data of the tracking target;
a movement mode recognition module, configured to determine a movement mode of the tracking target based on the movement data; and
a precise positioning module, configured to determine an actual position of the tracking target based on the initial position and the movement mode.

9. An electronic device, **characterized by** comprising:
a memory, configured to store a computer program; and
a processor, configured to implement the steps of the method for tracking and positioning according to any one of claims 1 to 7 when executing the computer program.

10. A computer-readable storage medium, storing a computer program, **characterized in that** when the computer program is executed by a processor, the steps of the method for tracking and positioning according to any one of claims 1 to 7 are implemented.
